# EUROPEAN PATENT APPLICATION

(11) **EP 1 727 068 A1**
(43) Date of publication of application: **29.11.2006**
(21) Application number: 05252852.8
(22) Date of filing: 10.05.2005
(51) Int. Cl.: G06F 21/00

(54) **Distributing digital data**

(71) Applicant: Associated Newspapers Limited, Kensington, London W8 5TT (GB)
(72) Inventor: Newall, Sacha, London SW10 9TD (GB)
(74) Representative: Downing, Michael Philip

(57) **Abstract**

A method of distributing digital data is disclosed, comprising the steps of dividing the data into a first part and a second part and recording both parts on a data carrier, and physically conveying the data carrier to a recipient characterised in that the second part is recorded in a format accessible only on entry of a code, and the data carrier is provided with an associated indicia containing details of a secure communications means through which the code is conditionally provided. The data carrier will typically be a digital versatile disc (DVD), and the data concerned will typically be one of audio, video, and audiovisual (AV) data. The first part can be an initial section of the data, and the second part a subsequent section. Alternatively, the first part can be a synopsis of the second part. The second part is preferably encrypted. To keep the data carrier and the indicia together during delivery, they can be sealed within a bag or the indicia could be placed or printed on the carrier, or the indicia could be recorded on the carrier for display at the appropriate time. Where the associated indicia is separate from the carrier, it can comprise a newspaper or other periodical. Thus, readers of the newspaper will receive the data carrier and can view the first part; if they wish to view the second part then the newspaper will contain instructions as to how to obtain the code. Where the associated indicia is integral with the carrier, either by printing thereon or recording therein, a newspaper will still provide a useful distribution conduit. The secure communications means can be a telephone number, or a website. The conditions under which the code is provided can be an identity check, for example to identify a subscriber, or a payment.

## Description

### FIELD OF THE INVENTION

The present invention relates to the distribution of digital data.

### BACKGROUND ART

Digital data is now a product in its own right. It is rarely regarded as such by end users, who will instead believe that they are purchasing items such as films, audio tracks, and the like, but whether they realise or not they are in fact purchasing a right to use a set of digital data. The problems faced by the providers of such data are (first) how to persuade consumers to purchase rights in data and (second) how to distribute that intangible item, i.e. the data, to those consumers only.

The first problem relates to the disjoint between the consumer's view, that they are purchasing a feature film (for example) and the reality, that they are purchasing a usage right for data that encodes the audiovisual experience that is the film. Consumers typically wish to know what they are paying for, but in the case of a film they cannot be shown this without already receiving the product.

Studios typically issue "trailers" for film, which are in essence a synopsis of the film released in order to tempt consumers to view the whole. Whilst this is an established and effective technique, it is hampered in that the consumer cannot typically purchase the data there and then, immediately on viewing the trailer. The consumer must decide to visit an outlet through which the film can be acquired, or they must recall the film at a later date when an opportunity to purchase arises. Neither option is perfect; the consumer may be unwilling to set off immediately to an outlet that may (or may not) have stock, and at the later date the consumer's recollection may fail them.

Online methods of distribution work well for smaller data sizes such as music tracks, since the consumer experience of the synopsis, the purchase decision, and the delivery can be brought together. However, current bandwidth to residential premises is not suited to delivery of lengthy high-quality video streams.

### SUMMARY OF THE INVENTION

The present invention therefore provides a method of distributing digital data, comprising the steps of dividing the data into a first part and a second part and recording both parts on a data carrier, and physically conveying the data carrier to a recipient characterised in that the second part is recorded in a format accessible only on entry of a code, and the data carrier is provided with an associated indicia containing details of a secure communications means through which the code is conditionally provided.

The data carrier will typically be a digital versatile disc (DVD). This is an established media and allows sufficient data storage for a lengthy high-quality video stream. Further, readers for DVDs are widespread. Other forms of digital data media could be used, such as the compact disc (CD) or indeed any nonvolatile media such as CompactFlash (CF), Secure Digital (SD) cards or the like.

The data concerned will typically be one of audio, video, and audiovisual (AV) data. However, the method is not dependent on this and could, in principle, be applied to any form of digital data. However, the method is particularly applicable to AV applications since there is a straightforward opportunity to divide the data between the first and second parts. Specifically, the first part can be an initial section of the data, and the second part a subsequent section. Alternatively, the first part can be a synopsis of the second part.

The second part is preferably encrypted, since there are two aspects to the distribution problem. As well as ensuring that the data is delivered to willing consumers, the data (or at least the second part) must also be withheld from unwilling consumers.

The data carrier and the indicia need to be kept together during delivery. They can be sealed within a bag, for example. Alternatively, the indicia could be placed or printed on the carrier, or the indicia could be recorded on the carrier for display at the appropriate time.

Where the associated indicia is separate from the carrier, it can comprise a periodical such as a newspaper. Thus, readers of the periodical will receive the data carrier and can view the first part; if they wish to view the second part then the periodical will contain instructions as to how to obtain the code. Where the associated indicia is integral with the carrier, either by printing thereon or recording therein, a periodical will still provide a useful distribution conduit.

The secure communications means can be a telephone number, or a website. The conditions under which the code is provided can be an identity check, for example to identify a subscriber, or a payment.

### BRIEF DESCRIPTION OF THE DRAWINGS

An embodiment of the present invention will now be described by way of example, with reference to the accompanying figures in which;
Figure 1 shows a first embodiment of a data carrier according to the present invention;
Figure 2 shows a second embodiment of a data carrier according to the present invention;
Figure 3 shows a third embodiment being a journal associated with a data carrier, according to the present invention;
Figure 4 shows a fourth embodiment, being a journal enclosed together with a data carrier, according to the present invention; and
Figure 5 shows a timeline representing the encoded video, audio, or audiovisual data recorded on the data carrier, according to the present invention.

### DETAILED DESCRIPTION OF THE EMBODIMENTS

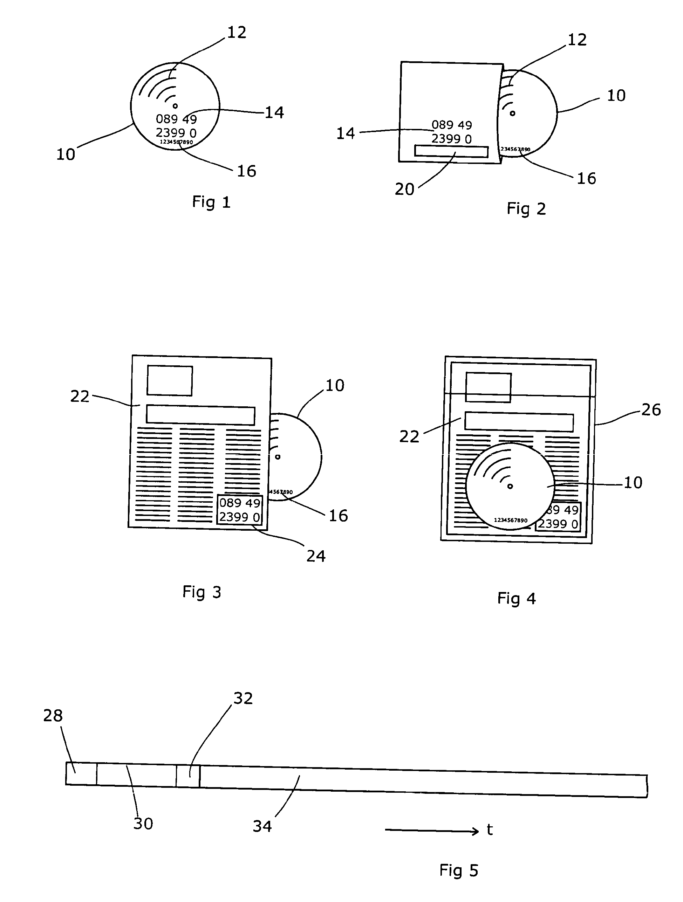

Referring to figure 1, a digital versatile disc (DVD) 10 contains a data stream recorded on tracks 12 which, in this case, encode an audiovisual sequence. This is encoded in two main parts, a first part designated as being free to view and a second part designated as being viewable only subject to conditions. The AV data is recorded on the disc together with associated software encoding instructing the DVD player to allow viewing of the first part of the request but to refuse viewing of the second part unless a code is entered.

Clearly, it is necessary to enable the consumer to obtain the code, and the disc is therefore printed with an indicia 14 which (in this case) consists of a telephone number which the consumer can call. On doing so, the consumer can be invited to make an agreed payment, in return for which the code can be disclosed. As an alternative, a website address could be provided. On visiting the site, the consumer would be presented with an e-commerce functionality allowing them to make the payment.

In this example, the code is itself stored on the disc and is unique to that disc. This prevents re-use of a code given to one consumer by other consumers. To identify this specific disc, a serial number 16 is provided on the surface of the disc near the indicia 14. This serial number 16 will have a one-to-one or many-to-one relationship with the code stored on the disc. The relationship between the two could be a simple look up table, in which the codes corresponding to each serial number are randomly generated and recorded for later recall, or one could be derived from the other through a suitable algorithm such as the transposition of digits or an arithmetic process.

Thus, in the embodiment of figure 1, the consumer who receives the disc can insert it into their DVD player and will be allowed to view the first part. If they wish to continue and view the second part, they can call the number shown on the face of the disc, quote the serial number and, in return for payment, receive the necessary code to unlock the second part. In the case of an AV stream that consists of a feature film, the first part can be a trailer for the film in which case the consumer may proceed to view the second part, being the whole film, if he finds the trailer to be sufficiently enticing. Alternatively, the first part could be an initial section of the film and the consumer may then be encouraged to view the second part in order to discover the remaining part of the story.

In practice, the first part will often be shorter in length than the second part, but this is not necessary the case.

Figure 2 shows the second embodiment. The DVD 10 again carries pre-recorded tracks 12 and serial number 16. On this occasion, it is however enclosed within a container 18 such as a cardboard sleeve. Other containers could be employed, such as opening box-type containers which provide much greater protection for the DVD 10 and which enabled it to be stacked for retention by the consumer. In this embodiment, the indicia 14 is placed on the exterior sleeve 18. This allows for the provision of a printed box 20 on the exterior sleeve in which the consumer can write the unlock code for future use should they which to view the DVD 10 again.

Figure 3 shows an alternative method of distributing the DVD 10. To ensure that the discs are distributed as widely as possible, they can be included within a newspaper 22 or other periodical. The indicia 14 can again be placed on the disc 10 as shown in figure 1, or it can be included within a newspaper 22 in a dedicated panel 24, either on an outer surface of the newspaper 22 or on an inside page. However, it would be preferable to place the serial number 16 on the disc 10 so to allow the newspaper to be duplicated in many identical copies.

Figure 4 shows how the newspaper 22 and the disc 10 can be kept together as a unitary pair by enclosing them within a heat-sealed bag 26 of a suitable transparent polymeric material such as polyethylene.

Figure 5 shows a representative timeline for data recorded on the DVD 10. An initial part 28 contains the instructions for the DVD player referring it to play the first section of 30. At the end of the first section 30, the unlock code 32 is recorded on the disc and the instructions 28 require the disc to stop at that point until the unlock code is entered. Once this is done successfully, the second part 34 is decrypted and played.

It will of course be understood that many variations may be made to the above-described embodiment without departing from the scope of the present invention. For example, the indicia 14 could be displayed as a pre-recorded section, shown to the viewer after the first section as an invitation to call the relevant number to obtain the required code.

## Claims

1. A method of distributing digital data, comprising the steps of;
dividing the data into a first part and a second part and recording both parts on a data carrier, and;
physically conveying the data carrier to a recipient;
**characterised in that**;
the second part is recorded in a format accessible only on entry of a code, and
the data carrier is provided with an associated indicia containing details of a secure communications means through which the code is conditionally provided.

2. A method according to claim 1, in which the data carrier is a digital versatile disc.

3. A method according to claim 1 or claim 2 in which the data is one of audio, video, and audiovisual data.

4. A method according to claim 3 in which the first part is an initial section of the data and the second part is a subsequent section.

5. A method according to claim 1 or claim 2 in which the first part is a synopsis of the second part.

6. A method according to any one of the preceding claims in which the second part is encrypted.

7. A method according to any one of the preceding claims in which the data carrier and the indicia are sealed within a bag.

8. A method according to any one of the preceding claims in which the associated indicia comprises a periodical.

9. A method according to any one of the preceding claims in which the secure communications means is at least one of a telephone number and a website.

10. A method according to any one of the preceding claims in which the conditions under which the code is provided include at least one of an identity check and a payment.
